# EUROPÄISCHE PATENTANMELDUNG

(11) **EP 1 130 621 A2**
(43) Veröffentlichungstag der Anmeldung: **05.09.2001**
(21) Anmeldenummer: 01200784.5
(22) Anmeldetag: 28.02.2001
(51) Int. Cl.: H01J 29/18, H01J 29/26, H01J 17/49

(54) **Plasmabildschirm mit blauem Leuchtstoff**

(30) Priorität: 01.03.2000 DE 10009916
(71) Anmelder: Philips Corporate Intellectual Property GmbH, 52064 Aachen (DE); Koninklijke Philips Electronics N.V., 5621 BA Eindhoven (NL)
(72) Erfinder: Jüstel, Thomas, Dr., 52064 Aachen (DE); Busselt, Wolfgang, 52064 Aachen (DE); Nikol, Hans, Dr., 52064 Aachen (DE)
(74) Vertreter: Gössmann, Klemens

(57) **Zusammenfassung**

Plasmabildschirm ausgerüstet mit einer Leuchtstoffschicht, die einen blauen, Eu²⁺-aktivierten Leuchtstoff und einen UV-C-Licht emittierenden Leuchtstoff enthält. Durch Beimischung eines UV-C-Licht emittierenden Leuchtstoffes zu einem Eu²⁺-aktivierten Leuchtstoff oder Beschichtung eines Eu²⁺-aktivierten Leuchtstoffes mit einem UV-C-Licht emittierenden Leuchtstoff oder Bedeckung einer Basisschicht aus einem Eu²⁺-aktivierten Leuchtstoff mit einer Deckschicht aus einem UV-C-Licht emittierenden Leuchtstoff wird die Photodegradation der Eu²⁺-aktivierten Leuchtstoffe im VUV-Bereich deutlich vermindert.

## Beschreibung

Die Erfindung betrifft einen Plasmabildschirm ausgerüstet mit einer Leuchtstoffschicht, die einen blauen, Eu²⁺-aktivierten Leuchtstoff enthält sowie einen Leuchtschirm und eine Leuchtstoffzubereitung.

Plasmabildschirme ermöglichen Farbbilder mit hoher Auflösung, großer Bildschirmdiagonale und sind von kompakter Bauweise. Ein Plasmabildschirm weist eine hermetisch abgeschlossene Glaszelle, die mit einem Gas gefüllt ist, mit gitterförmig angeordneten Elektroden auf. Durch Anlegen einer elektrischen Spannung wird eine Gasentladung hervorgerufen, die Licht im ultravioletten Bereich (145 bis 185 nm) erzeugt. Durch Leuchtstoffe wird dieses Licht in sichtbares Licht umgewandelt und durch die Frontplatte der Glaszelle zum Betrachter emittiert.

Für Plasmabildschirme werden Leuchtstoffe verwendet, die unter UV-Anregung besonders effizient sind. Häufig verwendete blau-emittierende Leuchtstoffe sind zum Beispiel BaMgAl₁₀O₁₇:Eu (BAM) und (Ba,Sr,Ca)₅(PO₄)₃Cl:Eu (SCAP), die durch Europium im bivalenten Zustand Eu²⁺ aktiviert sind. Eu²⁺-aktivierte Leuchtstoffe zeigen jedoch bei Bestrahlung mit Vakuum-UV-Licht (100 bis 200 nm) eine starke Abnahme in ihrer Lichtausbeute, während bei Bestrahlung mit längerwelligem UV-Licht (200 bis 400 nm) nur wenig Alterung zu beobachten ist.

Die Photodegradation der Eu²⁺-aktivierten Leuchtstoffe bei Anregung durch VUV-Licht wird durch die Oxidation des Aktivators Eu²⁺ zu Eu³⁺ hervorgerufen. Die Anwesenheit von Eu³⁺ in den Leuchtstoffpartikeln vermindert die Lichtausbeute, da Eu³⁺-Ionen die Excitonen abfangen und auf nicht strahlende Weise in den Grundzustand zurückkehren.

Durch Verwendung von Leuchtstoffen mit photostabileren Aktivatoren, wie zum Beispiel Ce³⁺ oder Pb²⁺ könnte dieses Problem umgangen werden. Diese Leuchtstoffe weisen aber eine geringere Farbsättigung und eine deutlich geringere Lichtausbeute unter VUV-Lichtanregung als Eu²⁺-aktivierte Leuchtstoffe auf.

Der Erfindung liegt die Aufgabe zugrunde, einen Plasmabildschirm ausgerüstet mit einem verbesserten blau-emittierenden Leuchtstoff bereitzustellen.

Die Aufgabe wird gelöst durch einen Plasmabildschirm ausgerüstet mit einer Leuchtstoffschicht, die einen Eu²⁺-aktivierten Leuchtstoff und einen UV-C-Licht emittierenden Leuchtstoff enthält.

Durch Kombination eines Eu²⁺-aktivierten Leuchtstoffes mit einem UV-C-Licht emittierenden Leuchtstoff wird die Photodegradation Eu²⁺-aktivierter Leuchtstoffe durch VUV-Licht, dessen Wellenlänge unterhalb 200 nm liegt, verhindert.

Es ist bevorzugt, dass der UV-C-Licht emittierende Leuchtstoff ausgewählt aus der Gruppe LaPO₄:Pr, YPO₄:Pr, YBO₃:Pr, Y₂SiO₅:Pr, LuBO₃:Pr und YPO₄:Bi ist.

Diese UV-Leuchtstoffe verhindern besonders effektiv die Photodegradation Eu²⁺-aktivierter Leuchtstoffe durch VUV-Licht.

Es ist weiterhin bevorzugt, dass der Eu²⁺-aktivierte Leuchtstoff ausgewählt aus der Gruppe BaMgAl₁₀O₁₇:Eu und (Ba,Sr,Ca)₅(PO₄)₃Cl:Eu ist.

Diese blau-emittierenden Leuchtstoffe sind besonders geeignet für die Verwendung in Plasmabildschirmen, da sie eine hohe Farbsättigung sowie eine effiziente Umwandlung von UV-Licht in blaues Licht zeigen und da sie der thermischen Belastung während der Herstellung der Plasmabildschirme standhalten.

Eine bevorzugte Ausführungsform sieht vor, dass die Leuchtstoffschicht eine Mischung aus Partikeln des Eu²⁺-aktivierten Leuchtstoffes und Partikeln des UV-C-Licht emittierenden Leuchtstoffes enthält.

In dieser Ausführungsform ist es bevorzugt, dass der Anteil an Partikeln des UV-C-Licht emittierenden Leuchtstoffes zwischen 1 und 50 Gew.-% liegt.

Diese Ausführungsform ist einfach zu realisieren, da der UV-C-Licht emittierende Leuchtstoff einfach zur Suspension des Leuchtstoffes, mit der die Leuchtstoffschicht hergestellt wird, gegeben werden kann.

Eine weitere bevorzugte Ausführungsform sieht vor, dass die Partikel des Eu²⁺-aktivierten Leuchtstoffes eine Beschichtung mit dem UV-C-Licht emittierenden Leuchtstoff aufweisen.

Eine andere bevorzugte Ausführungsform sieht vor, dass die Leuchtstoffschicht eine Basisschicht, die den Eu²⁺-aktivierten Leuchtstoff enthält, und eine Deckschicht, die den UV-C-Licht emittierenden Leuchtstoff enthält, aufweist.

Weiterhin betrifft die Erfindung auch einen Leuchtschirm ausgerüstet mit einer Leuchtstoffschicht, die einen Eu²⁺-aktivierten Leuchtstoff und einen UV-C-Licht emittierenden Leuchtstoff enthält.

Ein derartiger Leuchtschirm kann in einer Vorrichtung, die auch mit einem VUV-Licht emittierenden Plasma arbeitet, wie zum Beispiel einer Xenon-Entladungslampe, verwendet werden.

Die Erfindung betrifft auch eine Leuchtstoffzubereitung, die einen Eu²⁺-aktivierten Leuchtstoff und einen UV-C-Licht emittierenden Leuchtstoff enthält.

Diese Leuchtstoffzubereitung kann in einer Vorrichtung, die mit einem VUV-Licht emittierenden Plasma arbeitet wie zum Beispiel eine Xenon-Entladungslampe, als Leuchtstoff eingesetzt werden.

Im folgenden soll anhand von zwei Figuren und drei Ausführungsbeispielen die Erfindung näher erläutert werden. Dabei zeigt
- Fig. 1: den Aufbau und das Funktionsprinzip einer einzelnen Plasmazelle in einem AC-Plasmabildschirm und
- Fig. 2: die relativen Lichtintensitäten von BaMgAl₁₀O₁₇:Eu und einer Leuchtstoff-Mischung aus BaMgAl₁₀O₁₇:Eu und 10 Gew.-% LaPO₄:Pr.

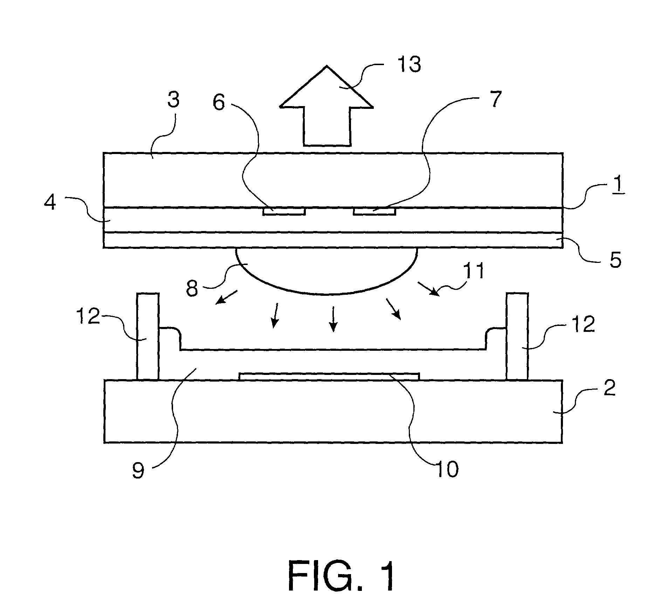

Gemäß Fig. 1 weist eine Plasmazelle eines AC-Plasmabildschirms mit einer planparallelen Anordnung eine Frontplatte 1 und eine Rückplatte 2 auf. Die Frontplatte 1 enthält eine Glasplatte 3, auf der eine dielektrische Schicht 4 und darüber eine Schutzschicht 5 aufgebracht sind. Die Schutzschicht 5 ist bevorzugt aus MgO und die dielektrische Schicht 4 ist beispielsweise aus PbO-haltigem Glas. Auf die Glasplatte 3 sind parallele, streifenförmige Entladungselektroden 6,7 aufgebracht, die von der dielektrischen Schicht 4 bedeckt sind. Die Entladungselektroden 6,7 sind zum Beispiel aus Metall oder ITO. Die Rückplatte 2 ist aus Glas und auf der Rückplatte 2 sind parallele, streifenförmige, senkrecht zu den Entladungselektroden 6,7 verlaufende Adresselektroden 10 aus beispielsweise Ag aufgebracht. Diese sind von Leuchtstoffschichten 9 in einer der drei Grundfarben rot, grün oder blau bedeckt. Die einzelnen Leuchtstoffschichten 9 sind durch vorzugsweise aus dielektrischem Material bestehende Barrieren 12 getrennt.

In der Plasmazelle, als auch zwischen den Entladungselektroden 6,7, von denen jeweils eine als Kathode bzw. Anode wirkt, befindet sich ein Gas, vorzugsweise ein Edelgasgemisch aus beispielsweise He, Ne, Xe oder Kr. Nach Zündung der Oberflächenentladung, wodurch Ladungen auf einem zwischen den Entladungselektroden 6,7 im Plasmabereich 8 liegenden Entladungsweg fließen können, bildet sich im Plasmabereich 8 ein Plasma, durch das vorzugsweise Strahlung 11 im UV-Bereich oder im VUV-Bereich erzeugt wird. Diese Strahlung 11 regt die Leuchtstoffschicht 9 zum Leuchten an, die sichtbares Licht 13 in einer der drei Grundfarben emittiert, das durch die Frontplatte 1 nach außen tritt und somit einen leuchtenden Bildpunkt auf dem Bildschirm darstellt.

Als blaue Leuchtstoffe werden beispielsweise Eu²⁺-aktivierte Leuchtstoffe wie BaMgAl₁₀O₁₇:Eu oder (Ba,Sr,Ca)₅(PO₄)₃Cl:Eu verwendet. Die blau-emittierende Leuchtstoffschicht enthält neben dem blauem Leuchtstoff noch einen UV-C-Licht emittierenden Leuchtstoff wie zum Beispiel LaPO₄:Pr, YPO₄:Pr, YBO₃:Pr, Y₂SiO₅:Pr, LuBO₃:Pr oder YPO₄:Bi.

Bei Bestrahlung eines Eu²⁺-aktivierten Leuchtstoff mit UV-Licht, dessen Wellenlänge 200 nm oder mehr beträgt, wird der Aktivator Eu²⁺ direkt angeregt. Das elektronisch angeregte Eu²⁺-Kation kehrt unter Aussendung eines Photons mit der Wellenlänge 450 nm wieder in den Grundzustand zurück.

Die Anregung der Eu²⁺-aktivierten Leuchtstoff mit UV-Licht, dessen Wellenlänge unterhalb von 200 nm liegt, führt zu einer Anregung des Wirtsgitters. Daraus resultiert eine Bildung von Excitonen (Elektron-Loch-Paaren). Ein gebildetes Loch wird von einem Eu²⁺-Kation unter Ausbildung eines Eu³⁺-Kations abgefangen. Das verbliebene Elektron kann einerseits von einem Eu³⁺-Kation unter Ausbildung eines aktivierten Eu²⁺-Kations, welches dann wiederum in den Grundzustand unter Aussendung eines Photons der Wellenlänge 450 nm zurückkehrt, abgefangen werden. Andererseits kann ein Elektron von einer Fehlstelle, Anionen-Leerstelle oder auch Farbzentrum genannt, im Kristallgitter des Leuchtstoffes abgefangen werden. Problematisch ist in diesem Fall, dass vermehrt Eu³⁺-Kationen zurückbleiben, die die Lumineszenz der Eu²⁺-Kation stören.

In Eu²⁺-aktivierten BAM oder SCAP liegen diese Anionen-Leerstellen ungefähr 5 eV unterhalb des Leitungsbandes des jeweiligen Leuchtstoffes. Ein in einer solchen Anionen-Leerstelle befindliches Elektron kann durch Zufuhr entsprechender Energie wieder freigesetzt werden. Das freigesetzte Elektron kann anschließend entweder von einem Eu³⁺-Kation oder erneut durch eine Anionen-Leerstelle abgefangen werden. In letzterem Fall kann es aber durch erneute Energiezufuhr wieder freigesetzt werden.

Die, für die Freisetzung eines Elektrons aus einer Anionen-Leerstelle, benötigte Energie entspricht dem Energiebereich von UV-C-Licht von 200 bis 300 nm. Durch Kombination der Eu²⁺-aktivierten Leuchtstoffe mit UV-C-Licht emittierenden Leuchtstoffen wird gleich die benötigte Energie, um durch Anion-Leerstellen abgefangene Elektronen wieder freizusetzen, zugeführt. Die Elektronen können sozusagen recycelt werden.

Dabei kann die blaue Leuchtstoffschicht entweder eine Mischung aus Partikeln des Eu²⁺-aktivierten Leuchtstoffes und des UV-C-Licht emittierenden Leuchtstoffes oder einen Eu²⁺-aktivierten Leuchtstoff mit einer Beschichtung aus einem UV-C-Phosphor oder eine Basisschicht aus dem Eu²⁺-aktivierten Leuchtstoff und eine Deckschicht aus einem UV-C-Licht emittierenden Leuchtstoff enthalten.

Als Herstellungsverfahren für eine solche Leuchtstoffschicht kommen sowohl Trockenbe-schichtungsverfahren, z. B. elektrostatische Abscheidung oder elektrostatisch unterstütztes Bestäuben, als auch Nassbeschichtungsverfahren, z. B. Siebdruck, Dispenserverfahren, bei denen eine Suspension mit einer sich dem Kanälen entlang bewegenden Düse eingebracht wird, oder Sedimentation aus der flüssigen Phase, in Betracht.

Für die Nassbeschichtungsverfahren müssen die Eu²⁺-aktivierten Leuchtstoffe in Wasser, einem organischen Lösemittel, gegebenenfalls zusammen mit einem Dispergiermittel, einem Tensid und einem Antischaummittel oder einer Bindemittelzubereitung dispergiert werden. Geeignet für Bindemittelzubereitungen für Plasmabildschirme sind anorganischen Bindemittel, die eine Betriebstemperatur von 250°C ohne Zersetzung, Versprödung oder Verfärbung überstehen, oder organische Bindemittel, die später durch Oxidation entfernt werden können.

Enthält die Leuchtstoffschicht eine Mischung aus dem Eu²⁺-aktivierten Leuchtstoff und dem UV-C-Licht emittierenden Leuchtstoff wird einfach eine Suspension mit beiden Leuchtstoffen hergestellt. Der Anteil an UV-C-Licht emittierenden Leuchtstoff liegt vorzugsweise zwischen 1 und 50 Gew.-% bezogen auf die Menge des Eu²⁺-aktivierten Leuchtstoffes.

Enthält die Leuchtstoffschicht dagegen einen Eu²⁺-aktivierten Leuchtstoff, der mit einem UV-C-Licht emittierenden Leuchtstoff beschichtet ist, wird zunächst der beschichtete Leuchtstoff hergestellt. Dazu wird der Eu²⁺-aktivierte Leuchtstoff in destilliertem Wasser suspendiert und anschließend werden Partikel des UV-C-Licht emittierenden Leuchtstoffes hinzugefügt, deren Partikelgrößen zwischen 100 und 1000 nm liegen. Zuvor wird der pH-Wert der Lösung des Eu²⁺-aktivierten Leuchtstoff so eingestellt, dass der Eu²⁺-aktivierte Leuchtstoff und der UV-C-Licht emittierende Leuchtstoff in der später dargestellten Suspension eine entgegensetzte Oberflächenladung aufweisen. Die Suspension wird noch für ein paar Stunden gerührt und anschließend wird der beschichtete Leuchtstoff abfiltriert und getrocknet. Danach wird wie oben beschrieben eine Suspension des beschichteten Leuchtstoffes zur Beschichtung der Rückplatte 2 hergestellt.
Soll die Leuchtstoffschicht eine Basisschicht aus Eu²⁺-aktiviertem Leuchtstoff und eine Deckschicht aus einem UV-C-Licht emittierenden Leuchtstoff enthalten, wird zunächst eine Suspension des Eu²⁺-aktivierten Leuchtstoffes auf die Rückplatte 2 aufgebracht und getrocknet. Anschließend wird auf diese Basisschicht eine Deckschicht aus einer Suspension des UV-C-Licht emittierender Leuchtstoffes aufgebracht und getrocknet. Anschließend werden die rot- bzw. grün-emittierenden Leuchtstoffschichten analog hergestellt.

Nach Aufbringen der Leuchtstoffschichten 9 wird die Rückplatte 2 zusammen mit weiteren Komponenten wie zum Beispiel einer Frontplatte 1 und einem Edelgasgemisch zur Herstellung eines Plasmabildschirms verwendet.

Grundsätzlich kann ein derartige Leuchtstoffschicht für alle Typen von Plasmabildschirmen, wie zum Beispiel bei AC-Plasmabildschirmen mit oder ohne Matrixanordnung oder DC-Plasmabildschirmen eingesetzt werden.

Außerdem kann eine derartige Leuchtstoffschicht im Leuchtschirm einer Xenon-Entladungslampe oder in einer anderen Vorrichtung, die mit einem VUV-Licht emittierenden Plasma arbeitet, verwendet werden.

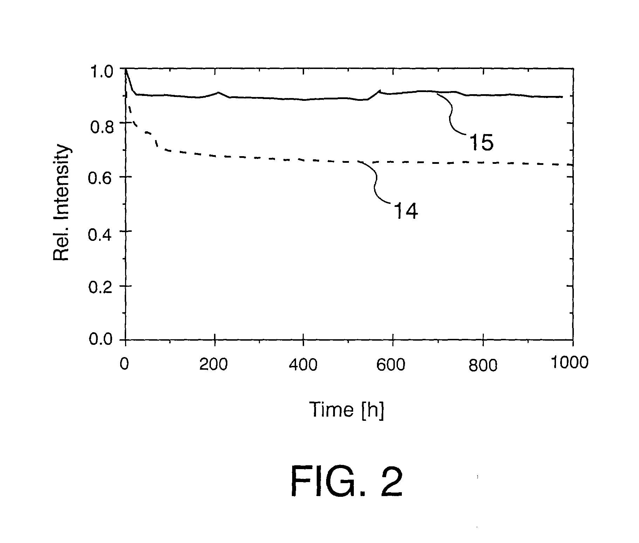

In Fig. 2 ist die relative Lichtintensität bei einer Xenon-Entladung für BaMgAl₁₀O₁₇:Eu und einer Leuchtstoff-Mischung aus BaMgAl₁₀O₁₇:Eu und 10 Gew.-% LaPO₄:Pr als Funktion der Zeit gezeigt. Dabei zeigt Graph 14 die relative Lichtintensität für eine Leuchtstoffschicht aus BaMgAl₁₀O₁₇:Eu. Der Graph 15 zeigt die relative Lichtintensität für eine Leuchtstoffschicht aus BaMgAl₁₀O₁₇:Eu und 10 Gew.-% LaPO₄:Pr. Die Abnahme der relativen Lichtintensität mit der Zeit ist bei letzter Schicht deutlich schwächer.

Im folgenden werden Ausführungsformen der Erfindung erläutert, die beispielhafte Realisierungsmöglichkeiten darstellen.

### Ausführungsbeispiel 1

Zunächst wurde eine Suspension aus 20 g BaMgAl₁₀O₁₇:Eu und 2 g LaPO₄:Pr hergestellt, der Additive wie ein organisches Bindemittel und ein Dispersionsmittel zugesetzt wurden. Mittels Siebdruck wurde die Suspension auf einer Rückplatte 2 aufgebracht und getrocknet. Dieser Prozessschritt wird nacheinander für die anderen beiden Leuchtstofftypen der Emissionsfarben Grün und Rot durchgeführt.
Durch thermische Behandlung der Rückplatte 2 bei 400 bis 600 °C in sauerstoffhaltiger Atmosphäre wurden alle in den Leuchtstoffschichten 9 verbliebenen Additive entfernt. Eine derartige Rückplatte 2 wurde dann zum Bau eines Plasmabildschirms verwendet.
Zur Bestimmung der relativen Lichtintensität in Abhängigkeit von der Zeit wurde ein Teil der Suspension zur Herstellung eines Leuchtschirms einer Zylinderlampe verwendet. Letztere wurde anschließend mit 200 mbar Xenon-Gas gefüllt und abgeschmolzen. Nach Aufbringen von Al-Streifenelektroden wurde die Lampe mit einem Standardtreiber für Dielectric Barrier Discharge Lampen betrieben. Die relative Lichtintensität als Funktion der Betriebsdauer ist in Fig. 2 gezeigt. Dabei entspricht Graph 14 einer Leuchtstoffschicht mit BaMgAl₁₀O₁₇:Eu und Graph 15 einer Leuchtstoffschicht mit BaMgAl₁₀O₁₇:Eu und 10 Gew.-% LaPO₄:Pr.

### Ausführungsbeispiel 2

90 g BaMgAl₁₀O₁₇:Eu (d₅₀ = 5 µm) wurden in 50 ml destilliertem Wasser suspendiert und der pH-Wert der Lösung wurde auf pH = 7.5 eingestellt. Anschließend wurden 10 g LaPO₄:Pr (d₅₀ = 0.6 µm) hinzugefügt und die Suspension wurde 2 h gerührt. Der mit LaPO₄:Pr beschichtete BAM-Leuchtstoff wurde abfiltriert und bei 80°C getrocknet.

Anschließend wurde eine Suspension des beschichteten Leuchtstoffes hergestellt, der Additive wie ein organisches Bindemittel und ein Dispersionsmittel zugesetzt wurden. Mittels Siebdruck wurde die Suspension auf einer Rückplatte 2 aufgebracht und getrocknet. Dieser Prozessschritt wird nacheinander für die anderen beiden Leuchtstofftypen der Emissionsfarben Grün und Rot durchgeführt.

Durch thermische Behandlung der Rückplatte 2 bei 400 bis 600 °C in sauerstoffhaltiger Atmosphäre wurden alle in den Leuchtstoffschichten 9 verbliebenen Additive entfernt. Eine derartige Rückplatte 2 wurde dann zum Bau eines Plasmabildschirms verwendet. Ausführungsbeispiel 3

Zunächst wurde eine Suspension von BaMgAl₁₀O₁₇:Eu hergestellt, der Additive wie ein organisches Bindemittel und ein Dispersionsmittel zugesetzt wurden. Mittels Siebdruck wurde die Suspension auf einer Rückplatte 2 aufgebracht und getrocknet.

Anschließend wurde eine Suspension von YBO₄:Bi hergestellt, der Additive wie ein organisches Bindemittel und ein Dispersionsmittel zugesetzt wurden. Diese Suspension wurde mittels Siebdruck auf die Teile der Rückplatte 2 aufgebracht, wo zuvor BaMgAl₁₀O₁₇:Eu aufgebracht worden war, und getrocknet. Danach befand sich auf der Basisschicht aus BaMgAl₁₀O₁₇:Eu eine Deckschicht aus YBO₄:Bi.

Weiterhin wurden nacheinander Suspensionen von Leuchtstofftypen der Emissionsfarben Grün und Rot hergestellt, denen jeweils Additive wie ein organisches Bindemittel und ein Dispersionsmittel zugesetzt wurden. Diese Suspensionen wurden mittels Siebdruck auf Rückplatte 2 aufgebracht und getrocknet.

Durch thermische Behandlung der Rückplatte 2 bei 400 bis 600 °C in sauerstoffhaltiger Atmosphäre wurden alle in den Leuchtstoffschichten 9 verbliebenen Additive entfernt. Eine derartige Rückplatte 2 wurde dann zum Bau eines Plasmabildschirms verwendet.

## Patentansprüche

1. Plasmabildschirm ausgerüstet mit einer Leuchtstoffschicht, die einen Eu²⁺-aktivierten Leuchtstoff und einen UV-C-Licht emittierenden Leuchtstoff enthält.

2. Plasmabildschirm nach Anspruch 1,
**dadurch gekennzeichnet**,
dass der UV-C-Licht emittierende Leuchtstoff ausgewählt aus der Gruppe LaPO₄:Pr, YPO₄:Pr, YBO₃:Pr, Y₂SiO₅:Pr, LuBO₃:Pr und YPO₄:Bi ist.

3. Plasmabildschirm nach Anspruch 1,
**dadurch gekennzeichnet**,
dass der Eu²⁺-aktivierte Leuchtstoff ausgewählt aus der Gruppe BaMgAl₁₀O₁₇:Eu und (Ba,Sr,Ca)₅(PO₄)₃Cl:Eu ist.

4. Plasmabildschirm nach Anspruch 1,
**dadurch gekennzeichnet**,
dass die Leuchtstoffschicht eine Mischung aus Partikeln des Eu²⁺-aktivierten Leuchtstoffes und Partikeln des UV-C-Licht emittierenden Leuchtstoffes enthält.

5. Plasmabildschirm nach Anspruch 4,
**dadurch gekennzeichnet**,
dass der Anteil an Partikeln des UV-C-Licht emittierenden Leuchtstoffes zwischen 1 und 50 Gew.-% liegt.

6. Plasmabildschirm nach Anspruch 1,
**dadurch gekennzeichnet**,
dass die Partikel des Eu²⁺-aktivierten Leuchtstoffes eine Beschichtung mit dem UV-C-Licht emittierenden Leuchtstoff aufweisen.

7. Plasmabildschirm nach Anspruch 1,
**dadurch gekennzeichnet**,
dass die Leuchtstoffschicht eine Basisschicht aus dem Eu²⁺-aktivierten Leuchtstoff und eine Deckschicht aus dem UV-C-Licht emittierenden Leuchtstoff aufweist.

8. Leuchtschirm ausgerüstet mit einer Leuchtstoffschicht, die einen Eu²⁺-aktivierten Leuchtstoff und einen UV-C-Licht emittierenden Leuchtstoff enthält.

9. Leuchtstoffzubereitung, die einen Eu²⁺-aktivierten Leuchtstoff und einen UV-C-Licht emittierenden Leuchtstoff enthält.
